# EUROPEAN PATENT SPECIFICATION

(11) **EP 0 278 425 B1**
(45) Date of publication and mention of the grant of the patent: **25.05.1994**
(21) Application number: 88101695.0
(22) Date of filing: 05.02.1988
(51) Int. Cl.: G06F 12/08

(54) **Data processing system and method with management of a mass storage buffer**
Datenverarbeitungsanordnung und Verfahren mit Massenspeicherpufferverwaltung
Système et procédé de traitement de données avec gestion d'un tampon de mémoire de masse

(30) Priority: 13.02.1987 US 14901
(43) Date of publication of application: 17.08.1988
(73) Proprietor: International Business Machines Corporation, Armonk, N.Y. 10504 (US)
(72) Inventor: Barrett, Gerald George, Austin Texas 78728 (US); Pasha, Syed Zahid, Austin Texas 78727 (US); Shaheen-Gouda, Amal Ahmed, Austin Texas 78759 (US)
(74) Representative: Bailey, Geoffrey Alan

(56) References cited:
- EP-A- 0 109 309
- US-A- 4 437 155
- US-A- 4 530 055
- IBM TECHNICAL DISCLOSURE BULLETIN, vol. 24, no. 3, August 1981, pages 1559-1562, New York, US; B.T. BENNETT et al.: "Improving performance of buffered DASD to which some references are sequential"
- IBM TECHNICAL DISCLOSURE BULLETIN, vol. 26, no. 3B, August 1983, pages 1746-1747, New York, US; H.E. KAMIONKA et al.: "Limited replacement and migration controls"

## Description

This invention relates to the accessing of data from a mass storage device and specifically to the management of a buffer in a storage adapter connected to the mass storage device.

Most data processing systems require mass storage facilities that store large amounts of data. One such mass storage device is a hard file. The hard file includes several surfaces having a magnetic coding for the magnetic storage of data. Data is stored and retrieved by moving a magnetic sensor or head over the surface. The surfaces are rotated at a high speed. Data is stored on the surfaces in concentric channels termed tracks. Each track includes a series of sequentially located sectors that are addressable for the storage and retrieval of data. A head located above a track does not have to be moved to read or write data in sectors of that track since the rotation of the surface will eventually bring the sectors of this track into proximity with the head. When information is located on a different track, the head will have to be relocated over that track to read or write data into sectors of that track. The movement of this head is termed a seek operation.

Small data buffers have been used to interface to the hard file mass memory devices. The management of data in these buffers has traditionally followed a first-in first-out procedure. In other words, the data that has been input to the buffer at the first, the oldest data, is that is output the first. These buffers are used for both read and write operations to storage locations on the hard file. Another technique for managing data in such a buffer is the last-in first-out procedure. In the last-in first-out procedure the last data provided to the buffer is the first data that is output from the buffer.

US-A-4 437 155 discloses a memory subsystem including a mass memory and a cache store for storing segments of data, whereby different ages are assigned to segments of data depending on whether the segments are brought into the cache store because they were accessed by a host processor, or are brought into the cache store on speculation that they contain data which may be soon accessed by the host processor.

US-A-4 530 055 discloses an apparatus for regulating the destaging of written-to segments from a cache memory to a bulk memory such that the segments which have been resident in the cache memory for the longest period of time are destaged first and destaging takes place only if the age since first write of the oldest written-to segment is equal to or greater than a predetermined threshold age.

It is the object of the present invention to provide a data buffer for interfacing to a mass memory storage device that includes a technique to optimise the storage of data which has not been specifically requested but is anticipated to be requested.

According to the invention, there is provided, a method of operating a data processing system comprising a system processor, mass storage means and a storage adapter, including a storage buffer coupling the system processor to the mass storage means, the method comprising the steps as claimed in claim 1.

There is further provided in accordance with the invention, a data processing system as claimed in claim 5.

In a preferred embodiment of the invention to be described in detail later, a mass storage device is connected to an interface to control the storing or retrieving of information from the storage device. The storage interface includes a data buffer including a plurality of data blocks each for the storage of data in response to a command from a storage driver. The capacity of the data buffer includes enough memory to store data in response to all commands that can be processed by the interface for the storage devices connected and further to store data for the non-requested data commands from the storage driver.

The storage driver regulates the storage of data in the buffer by reserving blocks of the buffer in response to the access storage device access commands from the processor and in response to a non-requested data commands. Blocks reserved for data read from or written to the device as a response to a processor command stay reserved only while such command is being executed. Blocks reserved for non-requested data stay in this state till the data is requested by the processor or the block is reallocated by the device driver. The storage driver determines the length of time that data has been stored in blocks for the non-requested data commands. The driver then reallocates data buffer blocks in response to storage device access commands from the processor when there are no blocks available. This reallocation is accomplished by the storage driver determining which of the blocks having data stored in response to a non-requested data command have stored data for an age that exceeds a predetermined maximum age. If there are no data blocks with data stored for a time in excess of this maximum age, the system driver then allocates data blocks that have data stored in response to non-requested data commands that have the least length of storage time.

The embodiment of the invention will now be described by way of example, with reference to the accompanying drawings, in which:
Figure 1 is a block diagram of a data processing system including the invention;
Figure 2 is a block diagram illustrating the data structure used by the system driver and the interface adapter;
Figure 3 is a state diagram for the interface data buffer for read and write operations;
Figure 4 is a flow chart illustrating the system driver procedures for managing the interface adapter cache; and
Figure 5 is a flow chart illustrating the storage driver procedures for servicing different storage devices.

The present invention relates to the management of a data buffer connected to several mass storage devices. In the preferred embodiment the data buffer is contained in an interface connected to three hard file disks. The interface responds to a storage driver program contained in the system processor that provides commands for storing and retrieving data from these hard disks. The data retrieved and sent to the hard disks is temporarily stored in the data buffer. This storage driver includes the capability to anticipate read commands from the system. Special read commands are issued in response to this anticipation. These read commands are termed "read ahead" commands and cause data to be read from the hard disks and stored in the data buffer. Normal read and write commands also cause data to be stored in the buffer but the data is then input immediately into the system memory or the hard file. The read ahead data however continues to be stored until an actual read command is received.

The present system optimally manages the storing of read ahead data in this buffer.

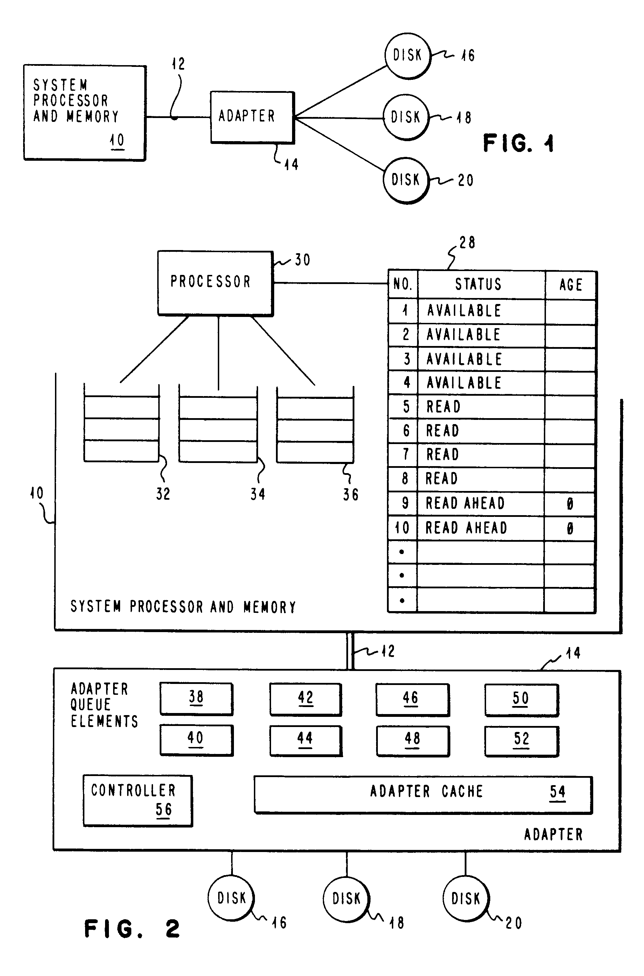

Figure 1 is a block diagram of a data processing system. The system processor and memory 10 is connected via a bus 12 to an adapter interface 14. The adapter interface is connected to three hard files 16, 18, and 20.

Figure 2 illustrates in symbolic form the storage driver software that is executed in processor 30 and that controls dequeueing requests from three command queues 32, 34 and 36. The command queues 32, 34 and 36 correspond to disk 16, 18 and 30, respectively. These command queues store read and write commands from applications software being executed in the processor 30. The storage driver being executed in processor 30 also controls a table 28 that includes the status of the data in a buffer. The adapter 14 is connected via an I/O bus 12 to the system processor and memory 10. This adapter 14 includes an adapter cache 54. The adapter 14 further includes several adapter queue elements 38, 40, 42, 44, 46, 48, 50 and 52. Adapter queue elements 38 and 40 are dedicated to disk 16. Likewise, adapter queue elements 42 and 44 are dedicated to disk 18 and adapter queue elements 46 and 48 are dedicated to disk 20. Adapter queue elements 50 and 52 are dedicated for commands to manage the cache 54. The adapter 14 further includes a controller 56 that responds to commands from the storage driver in the system processor and memory 10.

In the preferred embodiment the cache 54 is a 16 K Byte RAM that is divided into 32 blocks of 512 bytes each. The table 28 in the system processor memory 10 includes the status of each one of these blocks. The device driver executing in processor 30 issues four types of commands. The first two, read and write, are issued in response to storage device access commands from applications programs running in processor 30. In response to these commands, the device driver provides the read and write commands to the adapter 14. These commands are stored in the adapter queue elements such as 38 and 40. If the command is a write command, the data for the write command is stored in a data block in cache 54 until it is ready to be written to the appropriate hard file. If the command is a read command, the data read from the hard file is temporarily stored in a data block in the cache 54. The device driver in processor 30 further provides a read ahead command that is an anticipatory command anticipating the future read command for a certain block of data.

Data that is read in response to the read ahead commands is also stored in the adapter cache 54. Optimally this data remains in cache 54 until a read command for that data is received by the system driver. When such a command is received the system driver and processor 30 provides a read cache command that is stored in adapter queue elements 50 or 52 in the adapter 14. The data is thus read from cache 54 directly without having to access the disk and sent immediately to the system processor and memory 10.

Obviously if enough read ahead commands are executed and the data for these read ahead commands is not immediately accessed by read commands from the application software in processor 30, the cache 54 will fill up with this data and not have room for data for read and write commands from the processor. Additionally no other read ahead commands can be executed. The present system provides a solution to this problem by managing the data contained in the cache. The system driver executing in processor 13 maintains a record represented by table 28 that details the status of each of the blocks in the adapter cache 54. In addition, if the block contains data stored in response to a read ahead command, the device driver in processor 30 maintains a number indicative of how long this data has been stored in cache 54.

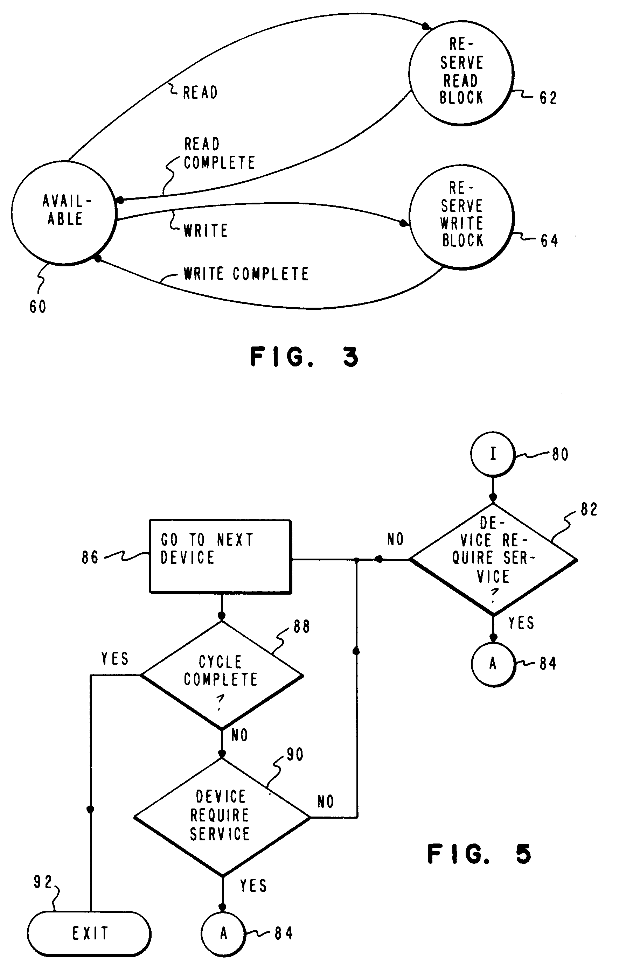

Figure 3 is a simplified state flow diagram illustrating the management of data blocks in the cache 54 for read and write commands from the system driver in the processor 30. In Fig. 3, a data block is available, state 60, until it is reserved by the driver in processor 30 when a read command is received. At that point the system driver in processor 30 then reserves the data block for storage of the data received from the disk read, state 62. The block is made available again by the system driver in processor 30 when the read operation is completed by the transmission of the data from the data block in cache 54 to processor 30. In the preferred embodiment this is normally a direct memory access (DMA) transfer. Therefore, the status of the data block in cache 54 returns to state 60 and is available. Likewise, when a write command is executed, the write data must be stored in the data block in cache 54. Therefore, the system driver in processor 30 reserves a block in cache 54 as illustrated by state 64. When the write command is completed, the system driver in processor 30 then makes this data block available. Referring to Fig. 2, the system driver in processor 30 maintains a record of each of the data block and the status of that data block as illustrated by table 28.

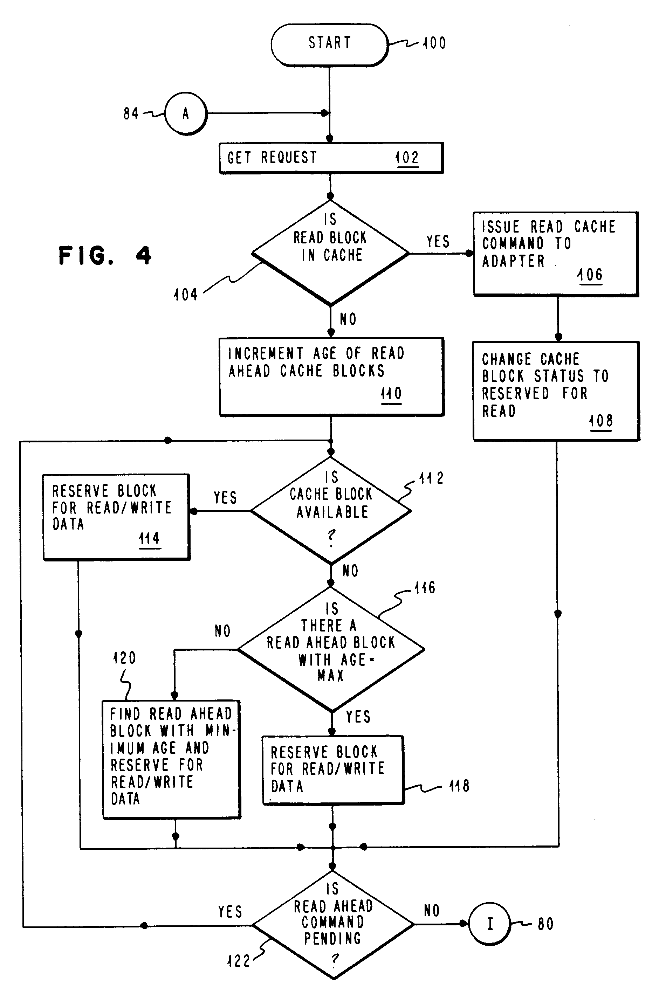

Figure 3 is complete as it addresses read and write commands from the system driver in processor 30. However, the state diagram in Fig. 3 does not address the read ahead commands or read cache commands. These commands are discussed in detail in the software flow diagrams of Figs. 4 and 5.

Figure 4 is a flow chart for the procedures in the system driver in processor 30 for managing cache 54 in adapter 14. The flow starts at 100 and proceeds to step 102. In step 102 the system driver in processor 30 receives a request to either read or write data to one of the mass memory storage devices, disks disk 16, 18 or 20. In step 104, the system driver in processor 30 determines if the request is to read a block of data that has been previously stored in cache 54 as a the result of a read ahead command. If so, the driver proceeds to step 106 to issue a read cache command to read the specific block in cache 54. The driver proceeds to step 108 to change the cache block status (Table 28 in Fig. 2) to be reserved for a read. The driver then proceeds to step 122 that will be discussed later.

Returning to step 104, if the request from the application software in processor 30 is not for a block to be read that is in cache 54, then the driver proceeds to step 110 to increment the age of all read ahead blocks stored in cache 54. The system driver then proceeds to step 112 to determine if a cache block is available. If so, in step 114, the driver reserves a block for either the read command or write command data. The driver then proceeds to step 122 to be discussed later.

Returning to step 112, if a cache block is not available in cache 54, the driver proceeds to step 116 to determine if there is a block storing read ahead data having an age that is equal to the maximum age. In the preferred embodiment the maximum age number is 5. If so, the driver proceeds to step 118 to reserve that block (i.e., the block with the maximum age) for the read/write data. If there is more than one block having a maximum age, the last block to reach maximum age is used. The driver then proceeds to step 122. Returning to step 116, if there are no read ahead blocks with maximum age, the driver proceeds to step 120 to find the data block in cache 54 that is storing data for a read ahead command that has the minimum age. The driver then reserves this block for the read/write data. The driver then proceeds to step 122.

In step 122, the driver determines if there is a read ahead command pending. If so, the driver then returns to step 112. If not, the driver proceeds to the software illustrated in flow chart form in Fig. 5 through connector 80.

In Fig. 5, the driver proceeds to step 82 to determine if the present device needs further service, i.e., are there other read or write commands to be processed. If so, the driver proceeds to step 104 (Fig. 4) through connector 84. Returning to step 82, if this present device does not need any further service, the driver proceeds to step 86 to go to the next device. In step 88, the driver determines if the service cycle has been completed. If all devices have been accessed and none of the devices have required service, then the service cycle is complete. If any one device, however, requires service, the driver must again start servicing all devices until all devices have been queried and none of the devices require service. If the cycle is complete and none of the devices have required service through a cycle, the driver then exits through connector 92 and returns to the applications software being executed in processor 30. If not, the driver proceeds to step 90 to determine if this device now needs service. If not, the driver returns to step 86 to increment the device counter and go to the next device. If the current device in step 90 does require service, then the driver proceeds through connector 84 to step 102 (Fig. 4).

## Claims

1. A method of operating a data processing system comprising a system processor, mass storage means and a storage adapter, including a storage buffer coupling the system processor to the mass storage means, the method comprising the steps of:
transferring data between the mass storage means and the buffer in response to requested read and write data commands from the processor and also in response to read ahead data commands for nonrequested data not immediately required by the processor;
temporarily holding requested data in the buffer until the requested data is accessed by the processor;
storing nonrequested data in the buffer until either the nonrequested data is accessed in response to a subsequent read data commmand from the processor or until a location in the buffer storing the nonrequested data is needed for storing data in response to a subsequent data command; and
when the buffer is full, determining which buffer location contains nonrequested data resident in the buffer for a period equal to or exceeding a predetermined maximum period, and storing requested or nonrequested data in the location so determined.

2. A method as claimed in claim 1, wherein data is stored in the buffer means in data blocks and each block of nonrequested data has associated therewith an indication of the period of retention of that data in the buffer, the method comprising the further step of updating said indication for each block of nonrequested data on receipt of a requested data command from the processor.

3. A method as claimed in claim 1 or claim 2, wherein if more than one buffer location contains nonrequested data resident in the buffer for a retention period equal to or greater than the maximum period then data is stored in the buffer location containing nonrequested data which has the lowest period of retention of said more than one buffer location.

4. A method as claimed in any preceding claim, wherein if none of the buffer locations containing non-requested data has a retention period greater than or equal to predetermined period then the location containing nonrequested data having the lowest retention period is used for storage of requested or non-requested data.

5. A data processing system comprising :
at least one mass storage means (16) for storing data;
storage adapter including a data buffer, for coupling the mass storage means to a system processor;
storage driver means for providing requested data commands to the storage adapter in response to storage access commands received from the system processor; for providing read ahead data commands to the storage interface means for nonrequested data not immediately required by the processor; for storing requested data in the data buffer until the requested data has been accessed by the processor; and for storing nonrequested data in the data buffer until either the nonrequested data is subsequently accessed by the processor or until a location storing the nonrequested data is needed for storing data specified in a subsequent data command, at which time the storage driver means determines the buffer location containing nonrequested data which has been resident in the buffer for a period greater than or equal to a predetermined maximum period, and stores requested or nonrequested data in the buffer location so determined.

6. A data processing system as claimed in claim 5, the data buffer means comprising a plurality of data blocks, wherein each block of nonrequested data has associated therewith an indication of the period of retention of that data in the buffer means, and wherein the storage driver means is operable, on receipt of a requested data command, to update the indication for each block of nonrequested data.

7. A data processing system as claimed in claim 5 or claim 6, wherein if more than one buffer location contains nonrequested data resident in the buffer for a retention period equal to or greater than the maximum period then data is stored in the buffer location containing nonrequested data which has the lowest period of retention of said more than one buffer locations.

8. A data processing system as claimed in any of claims 5 to 7, wherein if none of the buffer locations containing non-requested data has a retention period greater than or equal to predetermined period then the location containing nonrequested data having the lowest retention period is used for storage of requested or non-requested data.

## Patentansprüche

1. Eine Methode zum Betrieb eines Datenverarbeitungssystems, einen Systemprozessor, ein Massenspeichermittel und einen Speicheradapter aufweisend, mit einem Speicherpuffer, der den Systemprozessor mit dem Massenspeichermittel koppelt, wobei die Methode folgende Schritte umfaßt:
Transfer von Daten zwischen dem Massenspeichermittel und dem Puffer in Antwort auf angeforderte Lese- und Schreibdatenbefehle vom Prozessor und auch in Antwort auf Vorauslese-Datenbefehle für nicht angeforderte Daten, die vom Prozessor noch nicht unmittelbar benötigt werden;
vorübergehendes Halten der angeforderten Daten im Puffer, bis auf die angeforderten Daten vom Prozessor zugegriffen wird;
Speichern nicht angeforderter Daten im Puffer, bis entweder auf die nicht angeforderten Daten in Antwort auf einen nachfolgenden Lesedatenbefehl vom Prozessor zugegriffen wird, oder bis eine Stelle im Puffer, an der nicht angeforderte Daten gespeichert werden, zum Speichern von Daten in Antwort auf einen nachfolgenden Datenbefehl benötigt wird; und
wenn der Puffer voll ist, Feststellen, an welcher Stelle im Puffer nicht angeforderte Daten gespeichert sind, die im Puffer während eines Zeitraums resident sind, der einem vorbestimmten Maximalzeitraum entspricht oder diesen überschreitet, und Speichern angeforderter oder nicht angeforderter Daten an der so festgestellten Stelle.

2. Eine Methode nach Anspruch 1, bei der Daten in dem Puffermittel in Datenblöcken gespeichert werden, und jedem Block von nicht angeforderten Daten eine Anzeige zugeordnet ist, die die Verweilzeit dieser Daten im Puffer anzeigt, wobei die Methode bei Empfang eines Befehls mit angeforderten Daten vom Prozessor desweiteren den Schritt der Aktualisierung der genannten Anzeige für jeden Block nicht angeforderter Daten umfaßt.

3. Eine Methode nach Anspruch 1 oder 2, bei der, wenn in mehr als einer Pufferstelle nicht angeforderte Daten enthalten sind, die im Puffer während einer Verweilzeit resident sind, die der Maximalzeit entspricht oder diese überschreitet, diese Daten dann an der Pufferstelle gespeichert werden, die nicht angeforderte Daten enthält, und die die niedrigste Verweilzeit der genannten mehr als einen Pufferstelle aufweist.

4. Eine Methode nach jedem der vorangehenden Ansprüche, bei der, wenn keine der Pufferstellen, die nicht angeforderte Daten enthält, eine Verweilzeit hat, die größer als oder entsprechend dem vorbestimmten Zeitraum ist, dann die Stelle mit nicht angeforderten Daten mit der kürzesten Verweilzeit zur Speicherung von angeforderten oder nicht angeforderten Daten verwendet wird.

5. Ein Datenverarbeitungssystem, das folgendes aufweist:
mindestens ein Massenspeichermittel (16) zum Speichern von Daten;
einen Speicheradapter mit einem Datenpuffer zum Koppeln des Massenspeichermittels mit einem Systemprozessor;
Speichertreibermittel, die die Befehle mit angeforderten Daten in Antwort auf Speicherzugriffsbefehle vom Systemprozessor zum Speicheradapter übertragen; zum Weitergeben von Vorauslese-Datenbefehlen zum Speicherschnittstellenmittel für nicht angeforderte Daten, die vom Prozessor nicht sofort benötigt werden; zum Speichern von angeforderten Daten im Datenpuffer, bis auf die angeforderten Daten vom Prozessor zugegriffen wird; und zum Speichern von nicht angeforderten Daten im Datenpuffer, bis entweder auf die nicht angeforderten Daten nachfolgend vom Prozessor zugegriffen wird, oder bis eine Stelle, in der nicht angeforderte Daten gespeichert werden, zur Speicherung von Daten benötigt wird, die in einem nachfolgenden Datenbefehl spezifiziert werden, wobei dann das Speichertreibermittel die Pufferstelle bestimmt, die nicht angeforderte Daten enthält, welche im Puffer während eines Zeitraums resident waren, der größer als oder entsprechend dem vorbestimmten Maximalzeitraum ist, und angeforderte oder nicht angeforderte Daten in der so bestimmten Pufferstelle speichert.

6. Ein Datenverarbeitungssystem nach Anspruch 5, bei dem das Datenpuffermittel eine Vielzahl von Datenblöcken umfaßt, wobei jedem Block von nicht angeforderten Daten eine Anzeige zugeordnet ist, die den Verweilzeitraum dieser Daten in dem Puffermittel anzeigt, und wobei das Speichertreibermittel bei Empfang eines Befehls mit angeforderten Daten die Anzeige für jeden Block von nicht angeforderten Daten aktualisieren kann.

7. Ein Datenverarbeitungssystem nach Anspruch 5 oder 6, bei dem, wenn mehr als eine Pufferstelle nicht angeforderte Daten enthält, die im Puffer während einer Verweilzeit resident waren, die der Maximalzeit entspricht oder diese überschreitet, diese Daten dann an der Pufferstelle gespeichert werden, die nicht angeforderte Daten enthält, welche die niedrigste Verweilzeit der genannten mehr als einen Pufferstelle aufweisen.

8. Ein Datenverarbeitungssystem nach jedem der Ansprüche 5 bis 7, bei dem, wenn keine Pufferstelle, die nicht angeforderte Daten enthält, eine Verweilzeit aufweist, die größer als oder entsprechend der vorbestimmten Zeit ist, dann die Stelle mit nicht angeforderten Daten mit der kürzesten Verweilzeit zur Speicherung von angeforderten oder nicht angeforderten Daten verwendet wird.

## Revendications

1. Procédé de fonctionnement d'un système de traitement de données comprenant un processeur du système, un moyen à mémoire de masse et un adaptateur de mémoire, comprenant un tampon de mémoire couplant le processeur du système au moyen à mémoire de masse, le procécé comprenant les étapes suivantes:
transfert de données entre le moyen à mémoire de masse et le tampon en réponse à des commandes de données de lecture et d'écriture demandées en provenance du processeur et aussi en réponse à des commandes de données précédentes de lecture pour des données non demandées qui ne sont pas immédiatement nécessaires pour le processeur;
maintien temporaire des données demandées dans le tampon jusqu'à ce que le processeur ait eu accès aux données demandées en réponse à une commande suivante de données de lecture en provenance du processeur ou jusqu'à ce qu'un emplacement dans le tampon stockant les données non demandées soit nécessaire pour stocker des données en réponse à une commande de données suivante, et
lorsque le tampon est plein, détermination de l'emplacement de tampon qui contient des données non demandées qui résident dans le tampon pendant une période égale ou supérieure à une période maximum prédéterminée, et stockage des données demandées et non demandées dans l'emplacement ainsi déterminé.

2. Procédé selon la revendication 1, dans lequel les données sont stockées dans le moyen à tampon dans des blocs de données et chaque bloc de données non demandées est associé à une indication de la période de maintien de ces données dans le tampon, le procédé comprenant l'étape supplémentaire de mise à jour de ladite indication pour chaque bloc de données non demandées à la réception d'une commande de données demandées en provenance du processeur.

3. Procédé selon la revendication 1 ou la revendication 2, dans lequel si plus d'un emplacement de tampon contient des données non demandées résidant dans le tampon pendant une période de maintien égale ou supérieure à la période maximum alors les données sont stockées dans l'emplacement du tampon contenant les données non demandées qui ont la plus faible période de maintien dudit plus d'un emplacement de tampon.

4. Procédé selon l'une quelconque des revendications précédentes, dans lequel si aucun des emplacements du tampon contenant des données non demandées n'a une période de maintien supérieure ou égale à la période prédéterminée alors l'emplacement contenant les données non demandées ayant la période de maintien la plus faible est utilisé pour stocker des données demandées ou non demandées.

5. Système de traitement de données comprenant:
au moins un moyen (16) à mémoire de masse pour stocker des données;
un adaptateur de mémoire comprenant un tampon de données, pour coupler le moyen à mémoire de masse à un processeur du système;
un moyen de commande de mémoire pour fournir des commandes de données demandées à l'adaptateur de mémoire en réponse à des commandes d'accès à la mémoire reçues en provenance du processeur du système; pour fournir des commandes de données précédentes de lecture au moyen d'interface de mémoire pour les données non demandées qui ne sont pas nécessaires immédiatement pour le processeur; pour stocker des données demandées dans le tampon de données jusqu'à ce que le processeur ait eu accès aux données demandées; et pour stocker les données non demandées dans le tampon de données jusqu'à ce que le processeur ait eu ensuite accès aux données non demandées ou jusqu'à ce qu'un emplacement stockant les données non demandées soit nécessaire pour stocker des données spécifiées dans une commande de données suivante, le moyen de commande de mémoire déterminant à cet instant l'emplacement de tampon contenant les données non demandées qui avaient résidé dans le tampon pendant une période supérieure ou égale à une période maximum prédéterminée, et stocke les données demandées ou non demandées dans l'emplacement du tampon ainsi déterminé.

6. Système de traitement de données selon la revendication 5, le moyen à tampon de données comprenant une pluralité de blocs de données, dans lequel chaque bloc de données non demandées est associé à une indication de la période de maintien de ces données dans le moyen à tampon, et dans lequel le moyen de commande de mémoire peut fonctionner, à la réception d'une commande de données demandées, pour mettre à jour l'indication pour chaque bloc de données non demandées.

7. Système de traitement de données selon la revendication 5 ou la revendication 6, dans lequel si plus d'un emplacement du tampon contient des données non demandées qui résident dans le tampon pour une période de maintien égale ou supérieure à la période maximum alors les données sont stockées dans l'emplacement du tampon contenant les données non demandées qui ont la plus faible période de maintien desdits plus d'un emplacements de tampon.

8. Système de traitement de données selon l'une quelconque des revendications 5 à 7, dans lequel si aucun des emplacements du tampon contenant des données non demandées n'a une période de maintien supérieure ou égale à la période prédéterminée alors l'emplacement contenant des données non demandées ayant la période de maintien la plus faible est utilisé pour stocker les données demandées ou non demandées.
